# EUROPEAN PATENT APPLICATION

(11) **EP 4 554 110 A1**
(43) Date of publication of application: **14.05.2025**
(21) Application number: 23208767.6
(22) Date of filing: 09.11.2023
(51) Int. Cl.: H04B 7/185

(54) **METHOD FOR PERFORMING AND/OR ENABLING SIDELINK-BASED AND/OR PC5-BASED COMMUNICATION USING A NON-TERRESTRIAL NETWORK OR NETWORK PART, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for performing and/or enabling sidelink-based and/or PC5-based communication between a first user equipment and a second user equipment using at least one network node or antenna entity or functionality of a mobile communication network, wherein the at least one network node or antenna entity or functionality is part of a non-terrestrial network or network part of the mobile communication network,
wherein the method comprises the following steps:
-- in a first step, the first user equipment transmits a radiofrequency signal towards the at least one network node or antenna entity or functionality of the mobile communication network,
-- in a second step, the second user equipment receives, from the at least one network node or antenna entity or functionality of the mobile communication network, a further radiofrequency signal,
wherein the functionality of the at least one network node or antenna entity or functionality of the mobile communication network and/or the further radiofrequency signal is or corresponds to at least one out of the following:
-- the at least one network node or antenna entity or functionality of the mobile communication network functions, with regard to the radiofrequency signal, as a passive reflector and/or as a reconfigurable intelligent surface,
-- the further radiofrequency signal is or corresponds to the radiofrequency signal being or having been reflected by the at least one network node or antenna entity or functionality of the mobile communication network,
-- the functionality of the at least one network node or antenna entity or functionality of the mobile communication network corresponds to a physical layer repeater,
-- the further radiofrequency signal is or corresponds to the radiofrequency signal having been received and amplified by the at least one network node or antenna entity or functionality of the mobile communication network.

## Description

### BACKGROUND

The present invention relates a method for performing and/or enabling sidelink-based and/or PC5-based communication between a first user equipment and a second user equipment using at least one network node or antenna entity or functionality of a mobile communication network, wherein the at least one network node or antenna entity or functionality is part of a non-terrestrial network or network part of the mobile communication network.

Furthermore, the present invention relates to a user equipment for performing and/or enabling sidelink-based and/or PC5-based communication between the user equipment and a second user equipment according to one of the preceding claims using at least one network node or antenna entity or functionality of a mobile communication network, wherein the at least one network node or antenna entity or functionality is part of a non-terrestrial network or network part of the mobile communication network.

Additionally, the present invention relates to a system or to a mobile communication network for performing and/or enabling sidelink-based and/or PC5-based communication between a first user equipment and a second user equipment using at least one network node or antenna entity or functionality of the mobile communication network, wherein the at least one network node or antenna entity or functionality is part of a non-terrestrial network or network part of the mobile communication network.

Furthermore, the present invention relates to a program and to a computer-readable medium for performing and/or enabling sidelink-based and/or PC5-based communication between a first user equipment and a second user equipment according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Stated otherwise, such mobile communication networks typically comprise, or are associated or assigned to, a plurality of base station entities that are able to provide radio coverage in their vicinity, typically to user equipments that are being located, at least temporarily, nearby a respective base station entity.

Such mobile communication networks that are purely or predominantly based on terrestrial infrastructures of the radio access network (and, hence, are also called terrestrial networks or TN-networks) are typically organized throughout a country (or a part of or a region within a country) in a repeating pattern of typically stationary (radio) cells (and associated base station entities) which typically belong to (or are operated or used by or associated or assigned to) a mobile network operator (MNO).

In contrast to such purely or predominantly terrestrial mobile communication networks, it is also known to provide communication services using non-terrestrial networks, i.e. mobile communication networks that use, at least partly, non-terrestrial infrastructures of the radio access network, especially using satellites and/or high-altitude platforms. In case of satellite-based non-terrestrial networks or non-terrestrial network parts or components, such non-terrestrial infrastructure might be based or located on satellites at different heights above the earth surface, e.g. low earth orbit (LEO) satellites, medium earth orbit (MEO) satellites and/or geostationary earth orbit (GEO) satellites.

Additionally, sidelink communication (or device-to-device communication) has been standardized in order to provide user equipments to communicate directly with each other, especially using the LTE sidelink PC5 interface and/or the 5G NR PC5 interface. E.g., the 3GPP has developed sidelink / PC5 based communication since Rel-12 with recent enhancements in 5G NR particularly for C-V2X (car-2-car) communication, public safety direction communication via sidelink and sidelink relay for coverage enhancements. This typically includes several modes of operation, for LTE this is: In mode 3, user equipments communicate directly between them, but the communications are managed by the cellular infrastructure (that, e.g., selects sub-channels or radio resources for each such sidelink transmission), whereas mode 4 does not require the support from the cellular infrastructure, i.e. user equipments autonomously select the subchannels or radio resources for their sidelink transmission. Hence, sidelink communication standards have been developed to allow user equipments or devices to communicate with each other directly with and without the assistance of the traditional cellular network.

However, at present, non-terrestrial network infrastructure has not been used in order to support or to enhance sidelink-based and/or PC5-based communication, and neither in order to make it possible at all, i.e. sidelink-based (and/or PC5-based) communication via a satellite or a non-terrestrial network has hitherto not been used.

### SUMMARY

An object of the present invention is to provide a technically simple, effective and cost-effective solution for rendering communications between two user equipment more flexible and/or more reliable and/or more energy-efficient and/or more performant and/or less detrimental to other communications or processes occurring in the vicinity, by means of using (or performing) and/or enabling sidelink-based and/or PC5-based communication between them using at least one network node or antenna entity or functionality of a mobile communication network. A further object of the present invention is to provide a corresponding user equipment, a corresponding system or a corresponding mobile communication network, and a corresponding program and computer-readable medium.

The object of the present invention is achieved by a method for performing and/or enabling sidelink-based and/or PC5-based communication between a first user equipment and a second user equipment using at least one network node or antenna entity or functionality of a mobile communication network, wherein the at least one network node or antenna entity or functionality is part of a non-terrestrial network or network part of the mobile communication network, wherein the method comprises the following steps:
-- in a first step, the first user equipment transmits a radiofrequency signal towards the at least one network node or antenna entity or functionality of the mobile communication network,
-- in a second step, the second user equipment receives, from the at least one network node or antenna entity or functionality of the mobile communication network, a further radiofrequency signal,
wherein the functionality of the at least one network node or antenna entity or functionality of the mobile communication network and/or the further radiofrequency signal is or corresponds to at least one out of the following:
-- the at least one network node or antenna entity or functionality of the mobile communication network functions, with regard to the radiofrequency signal, as a passive reflector and/or as a reconfigurable intelligent surface,
-- the further radiofrequency signal is or corresponds to the radiofrequency signal being or having been reflected by the at least one network node or antenna entity or functionality of the mobile communication network,
-- the functionality of the at least one network node or antenna entity or functionality of the mobile communication network corresponds to a physical layer repeater,
-- the further radiofrequency signal is or corresponds to the radiofrequency signal having been received and amplified by the at least one network node or antenna entity or functionality of the mobile communication network.

Especially by means of using sidelink-based and/or PC5-based communication between the user equipments using a network node or antenna entity or functionality that is part of a non-terrestrial network or network part of the mobile communication network - and especially compared to conventionally known non-terrestrial network-based communication -, it is advantageously possible, according to the present invention, to realize a more simplified operation (and, hence, less energy consumption) of the satellite (or high-altitude platform) regarding such sidelink-based and/or PC5-based communication (compared to the satellite or high-altitude platform functioning as base station entity towards the user equipments). Furthermore, it is advantageously possible to realize advantages regarding communication privacy aspects - as no intermediate decoding node is involved in the communication between the user equipments (in case the satellite node or high-altitude platform only acts as a passive reflector (and/or as a reconfigurable intelligent surface) or as a physical layer repeater), i.e. a classical operator or base station entity is bypassed in such sidelink-based and/or PC5-based communication between the user equipments.

Hence, according to the present invention, it is proposed to have a method - especially a standardized method - which allows 3GPP NR-based sidelink communication (or PC5-based communication) via a non-terrestrial network node, such as a satellite or high-altitude platform. In contrast to classical satellite-based communication, there is no uplink or downlink band required, but inside the sidelink frequency band, the satellite node or high-altitude platform node primarily acts as a reflector (or physical layer repeater or sidelink relay node) to direct the sidelink communication to a particular target area.

In the simplest solution, the at least one network node or antenna entity or functionality - i.e. the non-terrestrial network node - is a passive reflector, similar to a reconfigurable intelligent surface (or radio intelligent surface), which is used to mirror the inbound signal (the radiofrequency signal of the first user equipment) via the sidelink to a single user equipment or to a group of user equipments (i.e. the second user equipment; by means of the further radiofrequency signal) which (second) user equipment or group of (second) user equipments might be out of the direct reach of the communication signal (i.e. the radiofrequency signal of the first user equipment). Furthermore, the same general principle is also able to be based on a physical layer repeater (L1, layer 1) functionality, transparently amplifying the sidelink signal (i.e. the radiofrequency signal of the first user equipment) at the non-terrestrial network node, or, alternatively, the non-terrestrial network node could act as a sidelink relay (L2/3, layer 2/3).

According to the present invention, such sidelink-based and/or PC5-based communication between two user equipments via a satellite or high-altitude platform (i.e. via at least one network node or antenna entity or functionality thereof, i.e. of the mobile communication network involved) is realized by means of - in a first step - the first user equipment transmitting a radiofrequency signal towards the at least one network node or antenna entity or functionality of the mobile communication network, and - in a second step - the second user equipment receiving, from the at least one network node or antenna entity or functionality of the mobile communication network, a further radiofrequency signal.
According to the present invention, different embodiments are contemplated in realizing such communications:
According to one embodiment of the present invention, the at least one network node or antenna entity or functionality of the mobile communication network (in view of supporting the sidelink-based and/or PC5-based communication between the user equipments) functions (i.e. its functionality is or corresponds to), with regard to the radiofrequency signal, as a passive reflector and/or as a reconfigurable intelligent surface. This typically corresponds to the further radiofrequency signal being or corresponding to the radiofrequency signal being or having been reflected by the at least one network node or antenna entity or functionality of the mobile communication network.
According to another embodiment of the present invention, the at least one network node or antenna entity or functionality of the mobile communication network (in view of supporting the sidelink-based and/or PC5-based communication between the user equipments) functions, with regard to the radiofrequency signal, as a physical layer repeater. This typically corresponds to the further radiofrequency signal being or corresponding to the radiofrequency signal having been received and amplified by the at least one network node or antenna entity or functionality of the mobile communication network.

According to different embodiments or variants of the present invention, it is especially preferred that the radiofrequency signal (transmitted by the first user equipment in view of reaching the second user equipment, and received by the at least one network node or antenna entity or functionality) is or corresponds to a directed or beamformed or targeted radiofrequency signal, i.e. especially targeting the at least one network node or antenna entity or functionality. Cumulatively or alternatively thereto, it is especially preferred that the further radiofrequency signal (transmitted by the at least one network node or antenna entity or functionality, and received by the second user equipment) is or corresponds to a directed or beamformed or targeted further radiofrequency signal.

According to the present invention, it is advantageously possible and preferred that
-- either, regarding both the radiofrequency signal and the further radiofrequency signal, the same frequency or frequency band is used,
-- or wherein, regarding the radiofrequency signal, a first frequency or first frequency band is used, and, regarding the further radiofrequency signal, a second frequency or second frequency band is used, wherein the first and second frequency or frequency band are different,
wherein especially and for performing and/or enabling sidelink-based and/or PC5-based communication between the first user equipment and the second user equipment, the second user equipment transmits a second radiofrequency signal towards the at least one network node or antenna entity or functionality, and the first user equipment receives, from the at least one network node or antenna entity or functionality, a further second radiofrequency signal.

It is thereby advantageously possible to easily and efficiently implement the present invention.

According to the present invention, it is advantageously furthermore possible and preferred that
-- the functionality of the at least one network node or antenna entity or functionality of the mobile communication network corresponds to a sidelink relay node that modifies the further radiofrequency signal, based on the radiofrequency signal, in a manner according to at least one out of the following:
   -- the sidelink relay node performs recoding of the radiofrequency signal to obtain the further radiofrequency signal,
   -- the sidelink relay node performs layer 2-processing or layer 2 and layer 3-processing of the radiofrequency signal,
   -- the sidelink relay node performs a bundling and/or redirecting of the further radiofrequency signal, especially using a beamforming antenna.

It is thereby advantageously possible to easily and efficiently implement the present invention.

According to the present invention, it is furthermore advantageously possible and preferred that a 3GPP-defined sidelink and/or PC5 communication is used, wherein especially the at least one network node or antenna entity or functionality is a non-terrestrial network node aboard a satellite or a high-altitude platform.

It is thereby advantageously possible according to the present invention to realize and implement the inventive method in a comparatively simple and efficient manner.

Furthermore, it is advantageously possible and preferred according to the present invention that the sidelink-based and/or PC5-based communication between the first user equipment and the second user equipment
-- occurs or is realized exclusively via the at least one network node or antenna entity or functionality - by means of the second user equipment receiving the further radiofrequency signal from the at least one network node or antenna entity or functionality -, especially due to the radiofrequency signal being too weak or undetectable by the second user equipment at the location of the second user equipment, or
-- occurs or is realized both via a direct sidelink-based and/or PC5-based communication by means of the second user equipment receiving both the further radiofrequency signal from the at least one network node or antenna entity or functionality and as well the radiofrequency signal from the first user equipment.

It is thereby advantageously possible according to the present invention to realize and implement the inventive method in a comparatively simple and efficient manner.

According to the present invention, it is furthermore advantageously possible and preferred that the sidelink-based and/or PC5-based communication also involves - besides the first user equipment and the second user equipment - a third user equipment, wherein the sidelink-based and/or PC5-based communication between the first, second and third user equipments:
-- occurs or is realized - between the first and second user equipments - via the at least one network node or antenna entity or functionality by means of the second user equipment receiving the further radiofrequency signal from the at least one network node or antenna entity or functionality, and
-- occurs or is realized - between the first and third user equipments -via the direct sidelink-based and/or PC5-based communication by means of the third user equipment receiving the radiofrequency signal from the first user equipment.

It is thereby advantageously possible according to the present invention to realize and implement the inventive method in a comparatively simple and efficient manner.

Furthermore, it is advantageously possible and preferred according to the present invention that the sidelink-based and/or PC5-based communication also involves - besides using the at least one network node or antenna entity or functionality of a mobile communication network - using at least one further network node or antenna entity or functionality of the mobile communication network, wherein in a third step of the method - subsequent to the first step and prior to the second step -, the at least one network node or antenna entity or functionality of the mobile communication network, transmits an intermediate radiofrequency signal towards the at least one further network node or antenna entity or functionality of the mobile communication network, wherein the second user equipment receives, from the at least one further network node or antenna entity or functionality of the mobile communication network, the further radiofrequency signal, wherein the at least one further network node or antenna entity or functionality generates the further radiofrequency signal based on the intermediate radiofrequency signal,
wherein especially, the functionality of the at least one antenna entity or functionality and/or of the at least one further network node or antenna entity or functionality corresponds to a physical layer repeater, and wherein the intermediate radiofrequency signal is or corresponds to the radiofrequency signal having been received and amplified by the at least one network node or antenna entity or functionality of the mobile communication network, wherein the further radiofrequency signal is or corresponds to the intermediate radiofrequency signal having been received and amplified by the at least one further network node or antenna entity or functionality, and/or
wherein especially, the functionality of the at least one antenna entity or functionality corresponds to a sidelink relay node and/or the functionality of the at least one further network node or antenna entity or functionality corresponds to a further sidelink relay node, wherein the sidelink relay node modifies the intermediate radiofrequency signal, based on the radiofrequency signal, and/or wherein the further sidelink relay node modifies the further radiofrequency signal, based on the intermediate radiofrequency signal, in a manner according to at least one out of the following:
   -- the sidelink relay node performs recoding of the radiofrequency signal to obtain the intermediate radiofrequency signal and/or the further sidelink relay node performs recoding of the intermediate radiofrequency signal to obtain the further radiofrequency signal,
   -- the sidelink relay node performs layer 2-processing or layer 2 and layer 3-processing of the radiofrequency signal and/or the further sidelink relay node performs layer 2-processing or layer 2 and layer 3-processing of the intermediate radiofrequency signal,
   -- the sidelink relay node performs a bundling and/or redirecting of the intermediate radiofrequency signal, especially using a beamforming antenna, and/or the further sidelink relay node performs a bundling and/or redirecting of the further radiofrequency signal, especially using a beamforming antenna.

It is thereby advantageously possible according to the present invention to realize and implement the inventive method in a comparatively simple and efficient manner.

Furthermore, the present invention relates to a user equipment for performing and/or enabling sidelink-based and/or PC5-based communication between the user equipment and a second user equipment according to one of the preceding claims using at least one network node or antenna entity or functionality of a mobile communication network, wherein the at least one network node or antenna entity or functionality is part of a non-terrestrial network or network part of the mobile communication network, wherein the user equipment is configured such that:
-- the user equipment transmits a radiofrequency signal towards the at least one network node or antenna entity or functionality of the mobile communication network,
-- the second user equipment receives, from the at least one network node or antenna entity or functionality of the mobile communication network, a further radiofrequency signal.

Furthermore, the present invention relates to a system or to a mobile communication network for performing and/or enabling sidelink-based and/or PC5-based communication between a first user equipment and a second user equipment using at least one network node or antenna entity or functionality of the mobile communication network, wherein the at least one network node or antenna entity or functionality is part of a non-terrestrial network or network part of the mobile communication network, wherein the system or mobile communication network is configured such that:
-- the at least one network node or antenna entity or functionality of the mobile communication network receives, from the first user equipment, a radiofrequency signal,
-- the at least one network node or antenna entity or functionality of the mobile communication network transmits, to the second user equipment, a further radiofrequency signal,
wherein the functionality of the at least one network node or antenna entity or functionality of the mobile communication network and/or the further radiofrequency signal is or corresponds to at least one out of the following:
-- the at least one network node or antenna entity or functionality of the mobile communication network functions, with regard to the radiofrequency signal, as a passive reflector and/or as a reconfigurable intelligent surface,
-- the further radiofrequency signal is or corresponds to the radiofrequency signal being or having been reflected by the at least one network node or antenna entity or functionality of the mobile communication network,
-- the functionality of the at least one network node or antenna entity or functionality of the mobile communication network corresponds to a physical layer repeater,
-- the further radiofrequency signal is or corresponds to the radiofrequency signal having been received and amplified by the at least one network node or antenna entity or functionality of the mobile communication network.

Additionally, the present invention relates to a program comprising a computer readable program code which, when executed on a computer and/or on a user equipment and/or on a network node or an antenna entity or functionality of a mobile communication network, or in part on a user equipment and/or in part on a network node or an antenna entity or functionality of the mobile communication network, causes the computer and/or the user equipment and/or the network node or antenna entity or functionality of the mobile communication network to perform the inventive method.

Still additionally, the present invention relates to a computer-readable medium comprising instructions which when executed on a computer and/or on a user equipment and/or on a network node or an antenna entity or functionality of a mobile communication network, or in part on a user equipment and/or in part on a network node or an antenna entity or functionality of the mobile communication network, causes the computer and/or the user equipment and/or the network node or antenna entity or functionality of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

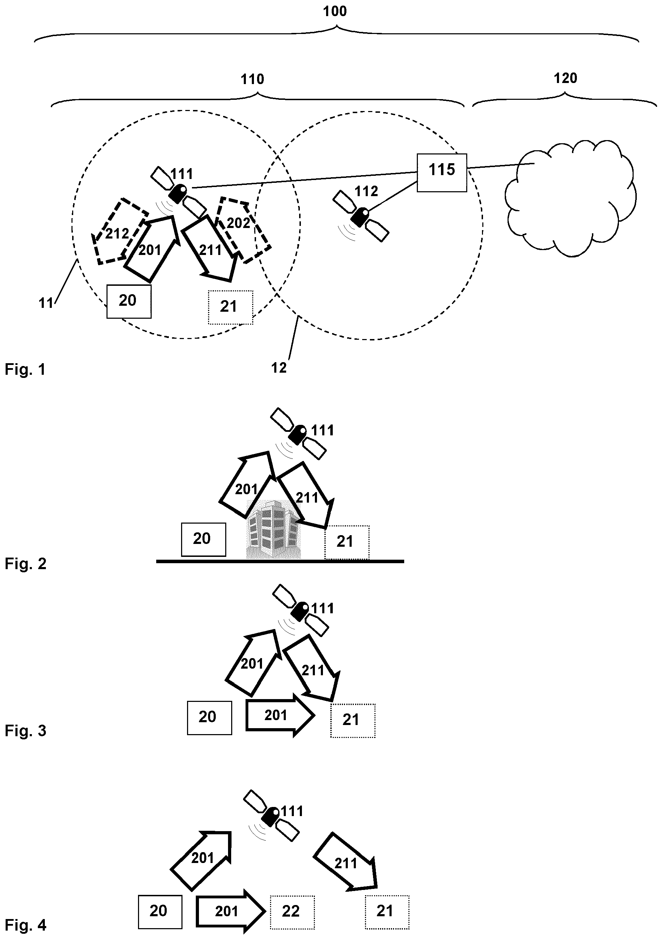

Figure 1 schematically illustrates the situation of a first user equipment, a second user equipment and of a mobile communication network, wherein the mobile communication network comprises a radio access network comprising at least one network node or antenna entity or functionality (with which the (first and/or second) user equipment might be connected - in view of the mobile communication network or the radio access network providing communication services to the user equipment -, but with which the (first and/or second) user equipment is not necessarily connected), and wherein the at least one network node or antenna entity or functionality is part of a non-terrestrial network or network part of the mobile communication network and is used, by the user equipments for performing and/or enabling sidelink-based and/or PC5-based communication.
Figures 2 to 5 schematically and exemplarily illustrate different scenarios of the user equipments performing sidelink-based and/or PC5-based communication using the at least one network node or antenna entity or functionality of the mobile communication network.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a first user equipment 20 and a second user equipment 21 are schematically shown together with a mobile communication network 100 (especially a cellular mobile communication network 100), wherein the mobile communication network 100 comprises a radio access network 110 comprising at least one network node or antenna entity or functionality 111. In Figure 1, a further network node or antenna entity or functionality 112 is represented as well.
Figure 1 illustrates the situation of the first and second user equipments 20, 21 with the mobile communication network 100 comprising the access network 110 and a core network 120. The access network 110 (or radio access network 110) is represented as a non-terrestrial network, comprising the network nodes or antenna entities or functionalities 111, 112 being schematically represented as satellites and providing at least part of the functionalities of base station entities that are part of such a radio access network 110. Figure 1 schematically and exemplarily also represents a ground station 115 that is used to communicate with the satellites or high-altitude platforms, i.e. network nodes or antenna entities or functionalities 111, 112.
Typically, the access network 110 comprises, besides the (first and second) base station entities 111, 112 (i.e. network nodes or antenna entities or functionalities 111, 112), still further base station entities and/or network nodes or antenna entities or functionalities, which are, however and for the sake of simplicity, not shown in Figure 1. In the exemplarily shown non-terrestrial network as an example of a mobile communication network 100 according to the present invention, each of the network nodes or antenna entities or functionalities 111, 112 of the mobile communication network 100 (or of the access network 110 thereof) serves a radio coverage area or radio cell, the (first) base station entity 111 serving a first radio cell 11, and the second base station entity 112 serving a second radio cell 12. In a non-terrestrial network, such radio coverage areas or radio cells 11, 12 are provided or generated by the base station entities 111, 112 (or network nodes or antenna entities or functionalities 111, 112) of the access network 110, and are typically geographically moving (i.e. continuously covering specific geographical areas at specific points in time but moving relative to the earth's surface).
The term base station entity 111, 112 is used here in association, especially and exemplarily, with satellites or high-altitude platforms being part of the non-terrestrial infrastructure of the mobile communication network 100 or of its (or assigned or associated) access network 110; however, it is to be understood, that such satellites or high-altitude platforms do not necessarily need to comprise all functional elements or functionalities of a base station entity, such as a gNB in, e.g., a 5G mobile communication network 100: In, or as part of, a non-terrestrial network, there are typically (and necessarily) further infrastructure elements such as ground stations 115 providing feeder links, etc., and the distribution of functionalities (or parts) of a base station entity might be distributed also among these further infrastructure elements; nevertheless, in order for a considered user equipment 20 being able to reach (i.e. by means of a radiofrequency signal), e.g. the (first) network node or antenna entity or functionality 111, such network node or antenna entity or functionality 111 (at least the antenna part - or radio unit) needs to be located, in a non-terrestrial network, aboard a satellite or satellite device or aboard a high-altitude platform.

As it is generally the case, it is possible that either the first user equipment 20 or the second user equipment 21 (or both the first and the second user equipment 20, 21) is/are connected with (or to) the at least one network node or antenna entity or functionality 111 of the radio access network 110 - in the sense that the network node or antenna entity or functionality 111 serves the first and/or second user equipment 20, 21 as a base station entity 111; however, this (the network node or antenna entity or functionality 111 serving the first and/or second user equipments 20, 21) is not mandatory, i.e. the first and/or the second user equipments 20, 21 might either not be served at all (by any base station entity) or might be served by another base station entity (not depicted in Figure 1), e.g. a base station entity of another mobile communication network.
However, according to the present invention, the at least one network node or antenna entity or functionality 111 is used (by the first and/or second user equipments 20, 21 - and irrespective of whether the at least one network node or antenna entity or functionality 111 (currently) serves as a base station entity to one or both user equipments 20, 21 or not) in order to enable or to perform a sidelink-based and/or PC5-based communication between the first user equipment 20 and the second user equipment 21.
As schematically illustrated in Figure 1, such a sidelink-based and/or PC5-based communication between the first user equipment 20 and the second user equipment 21 is able to be realized, according to the present invention,
-- by means of the first user equipment 20 transmitting (in a first step according to the inventive method) a radiofrequency signal 201 towards the at least one network node or antenna entity or functionality 111 of the mobile communication network 100 (i.e. at least also towards the at least one network node or antenna entity or functionality 111), and
-- by means of the second user equipment (21) receiving (in a second step according to the inventive method), from the at least one network node or antenna entity or functionality 111, a further radiofrequency signal 211.
In Figure 1, this is schematically indicated by means of two drawn-through arrows from the first user equipment 20 towards the second user equipment 21 - via the network node or antenna entity or functionality 111.

Typically according to the present invention, the sidelink-based and/or PC5-based communication between the first user equipment 20 and the second user equipment 21 not only comprises a transmission in the direction from the first user equipment 20 towards the second user equipment 21 but also in the opposite direction: This is schematically shown, in Figure 1, by means of the second user equipment 21 transmitting a second radiofrequency signal 202 towards the at least one network node or antenna entity or functionality 111, and the first user equipment 20 receiving, from the at least one network node or antenna entity or functionality 111, a further second radiofrequency signal 212. In Figure 1, this is schematically indicated by means of two dashed arrows between the second user equipment 21 towards the first user equipment 20 - via the network node or antenna entity or functionality 111.

According to the present invention, the functionality of the at least one network node or antenna entity or functionality 111 of the mobile communication network 100 and/or the further radiofrequency signal 201 is or corresponds to at least one out of the following:
-- the at least one network node or antenna entity or functionality 111 of the mobile communication network 100 functions, with regard to the radiofrequency signal 201, as a passive reflector and/or as a reconfigurable intelligent surface,
-- the further radiofrequency signal 211 is or corresponds to the radiofrequency signal 201 being or having been reflected by the at least one network node or antenna entity or functionality 111 of the mobile communication network 100,
-- the functionality of the at least one network node or antenna entity or functionality 111 of the mobile communication network 100 corresponds to a physical layer repeater,
-- the further radiofrequency signal 211 is or corresponds to the radiofrequency signal 201 having been received and amplified by the at least one network node or antenna entity or functionality 111 of the mobile communication network 100.
Furthermore, it is preferred that
-- the functionality of the at least one network node or antenna entity or functionality 111 of the mobile communication network 100 corresponds to a sidelink relay node that modifies the further radiofrequency signal 211, based on the radiofrequency signal 201, in a manner according to at least one out of the following:
-- the sidelink relay node performs recoding of the radiofrequency signal 201 to obtain the further radiofrequency signal 211,
-- the sidelink relay node performs layer 2-processing or layer 2 and layer 3-processing of the radiofrequency signal 201,
-- the sidelink relay node performs a bundling and/or redirecting of the further radiofrequency signal 211, especially using a beamforming antenna.

In Figures 2 to 5 different scenarios of the user equipments 20, 21 performing sidelink-based and/or PC5-based communications using the at least one network node or antenna entity or functionality 111 are schematically and exemplarily illustrated. For the sake of simplicity, in all these representations, only the direction of the communication from the first user equipment 20 towards the second user equipment 21 is schematically shown (i.e. the 'drawn-through arrows'). Of course, such sidelink-based and/or PC5-based communications between the two (or more) user equipments 20, 21 might (and typically will) also comprise the respective opposite communication direction - i.e. according to the 'dashed arrows' in Figure 1.
In Figure 2, the situation is schematically and exemplarily shown where the sidelink-based and/or PC5-based communication between the first user equipment 20 and the second user equipment 21 occurs or is realized exclusively via the at least one network node or antenna entity or functionality 111 - by means of the second user equipment 21 receiving the further radiofrequency signal 211 from the at least one network node or antenna entity or functionality 111 -, especially due to the radiofrequency signal 201 being too weak or undetectable by the second user equipment 21 at the location of the second user equipment 21; e.g. due to buildings or other obstacles in the line of sight between the first and second user equipments 20, 21.
In Figure 3, the situation is schematically and exemplarily shown where the sidelink-based and/or PC5-based communication between the first user equipment 20 and the second user equipment 21 occurs or is realized both via a direct sidelink-based and/or PC5-based communication (i.e. by means of the second user equipment 21 receiving both the further radiofrequency signal 211 from the at least one network node or antenna entity or functionality 111) and as well the radiofrequency signal 201 from the first user equipment 20 (i.e. according to a line-of -sight transmission between both user equipments).
In Figure 4, the situation is schematically and exemplarily shown where the sidelink-based and/or PC5-based communication also involves - besides the first user equipment 20 and the second user equipment 21 - a third user equipment 22, wherein the sidelink-based and/or PC5-based communication between the first, second and third user equipments 20, 21, 22:
-- occurs or is realized - between the first and second user equipments 20, 21 - via the at least one network node or antenna entity or functionality 111 by means of the second user equipment 21 receiving the further radiofrequency signal 211 from the at least one network node or antenna entity or functionality 111, and furthermore also
-- occurs or is realized - between the first and third user equipments 20, 22 -via the direct sidelink-based and/or PC5-based communication by means of the third user equipment 22 receiving the radiofrequency signal 201 from the first user equipment 20 (via a line-of-sight transmission).

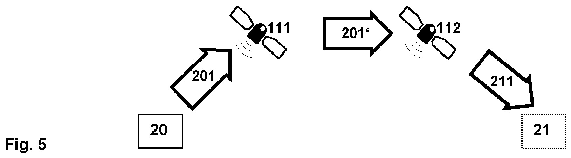

In Figure 5, the situation is schematically and exemplarily shown where the sidelink-based and/or PC5-based communication also involves - besides using the at least one network node or antenna entity or functionality 111 of the mobile communication network 100 - using at least one further network node or antenna entity or functionality 112 of the mobile communication network 100, wherein in a third step of the method - subsequent to the first step and prior to the second step -, the at least one network node or antenna entity or functionality 111 of the mobile communication network 100, transmits an intermediate radiofrequency signal 201' towards the at least one further network node or antenna entity or functionality 112 of the mobile communication network 100, wherein the second user equipment 21 receives, from the at least one further network node or antenna entity or functionality 112 of the mobile communication network 100, the further radiofrequency signal 211, wherein the at least one further network node or antenna entity or functionality 112 generates the further radiofrequency signal 211 based on the intermediate radiofrequency signal 201'.
Especially according to the present invention, the functionality of the at least one antenna entity or functionality 111 and/or of the at least one further network node or antenna entity or functionality 112 corresponds to a physical layer repeater, and wherein the intermediate radiofrequency signal is or corresponds to the radiofrequency signal 201 having been received and amplified by the at least one network node or antenna entity or functionality 111 of the mobile communication network 100, wherein the further radiofrequency signal 211 is or corresponds to the intermediate radiofrequency signal having been received and amplified by the at least one further network node or antenna entity or functionality 112, and/or
wherein especially, the functionality of the at least one antenna entity or functionality 111 corresponds to a sidelink relay node and/or the functionality of the at least one further network node or antenna entity or functionality 112 corresponds to a further sidelink relay node, wherein the sidelink relay node modifies the intermediate radiofrequency signal, based on the radiofrequency signal 201, and/or wherein the further sidelink relay node modifies the further radiofrequency signal 211, based on the intermediate radiofrequency signal, in a manner according to at least one out of the following:
-- the sidelink relay node performs recoding of the radiofrequency signal 201 to obtain the intermediate radiofrequency signal and/or the further sidelink relay node performs recoding of the intermediate radiofrequency signal to obtain the further radiofrequency signal 211,
-- the sidelink relay node performs layer 2-processing or layer 2 and layer 3-processing of the radiofrequency signal 201 and/or the further sidelink relay node performs layer 2-processing or layer 2 and layer 3-processing of the intermediate radiofrequency signal,
-- the sidelink relay node performs a bundling and/or redirecting of the intermediate radiofrequency signal, especially using a beamforming antenna, and/or the further sidelink relay node performs a bundling and/or redirecting of the further radiofrequency signal 211, especially using a beamforming antenna.

Hence, as shown in Figures 2 to 5, multiple usage scenarios are contemplated according to the present invention:
-- use the non-terrestrial network node (i.e. the at least one network node or antenna entity or functionality 111) to enable a second sidelink path to enhance the received signal at the target user equipment (i.e. the second user equipment 21) - as represented in Figure 3;
-- use the non-terrestrial network node (i.e. the at least one network node or antenna entity or functionality 111) to enable an indirect sidelink path to enable communication via sidelink while the direct path between the user equipments 20, 21 is blocked (e.g. by a mountain, building, ...) - as represented in Figure 2;
-- use the non-terrestrial network node (i.e. the at least one network node or antenna entity or functionality 111) to enable an indirect sidelink path to enable communication to a multitude of receiving user equipments (i.e. the second and third user equipments 21, 22), where parts of the receiver user equipments 21, 22 (especially the third user equipment 22 as shown in Figure 4) use the direct sidelink path, while other parts of the receiver user equipments 21, 22 (especially the second user equipment 21 as shown in
Figure 4) - which are (or might be; however not necessarily) outside of the reach of the direct path - use the sidelink path via the non-terrestrial network node.
-- use or enable the sidelink-based and/or PC5-based communication in an "around the globe scenario" (i.e. involving not only the (or one) network node or antenna entity or functionality 111 but also the at least one further network node or antenna entity or functionality 112, i.e. a plurality thereof) in which case the sidelink signal might be transferred between different satellites (or high-altitude platforms) via inter-satellite-links (ISLs) (or inter-high-altitude platform links).

According one kind of embodiments or variants of the present invention, it is preferred that, regarding both the radiofrequency signal 201 and the further radiofrequency signal 211, the same frequency or frequency band is used.
According another kind of embodiments or variants of the present invention, it is preferred that, regarding the radiofrequency signal 201, a first frequency or first frequency band is used, and, regarding the further radiofrequency signal 211, a second frequency or second frequency band is used, wherein the first and second frequency or frequency band are different.

Furthermore according to the present invention, it is especially preferred that a 3GPP-defined sidelink and/or PC5 communication is used, especially NR-based sidelink functionality.

Furthermore according to the present invention, it is especially preferred that the at least one network node or antenna entity or functionality 111 is a non-terrestrial network node aboard a satellite or aboard a high-altitude platform.

## Claims

1. Method for performing and/or enabling sidelink-based and/or PC5-based communication between a first user equipment (20) and a second user equipment (21) using at least one network node or antenna entity or functionality (111) of a mobile communication network (100), wherein the at least one network node or antenna entity or functionality (111) is part of a non-terrestrial network or network part of the mobile communication network (100), wherein the method comprises the following steps:
-- in a first step, the first user equipment (20) transmits a radiofrequency signal (201) towards the at least one network node or antenna entity or functionality (111) of the mobile communication network (100),
-- in a second step, the second user equipment (20) receives, from the at least one network node or antenna entity or functionality (111) of the mobile communication network (100), a further radiofrequency signal (211),
wherein the functionality of the at least one network node or antenna entity or functionality (111) of the mobile communication network (100) and/or the further radiofrequency signal (201) is or corresponds to at least one out of the following:
-- the at least one network node or antenna entity or functionality (111) of the mobile communication network (100) functions, with regard to the radiofrequency signal (201), as a passive reflector and/or as a reconfigurable intelligent surface,
-- the further radiofrequency signal (211) is or corresponds to the radiofrequency signal (201) being or having been reflected by the at least one network node or antenna entity or functionality (111) of the mobile communication network (100),
-- the functionality of the at least one network node or antenna entity or functionality (111) of the mobile communication network (100) corresponds to a physical layer repeater,
-- the further radiofrequency signal (211) is or corresponds to the radiofrequency signal (201) having been received and amplified by the at least one network node or antenna entity or functionality (111) of the mobile communication network (100).

2. Method according to claim 1, wherein
-- either, regarding both the radiofrequency signal (201) and the further radiofrequency signal (211), the same frequency or frequency band is used,
-- or wherein, regarding the radiofrequency signal (201), a first frequency or first frequency band is used, and, regarding the further radiofrequency signal (211), a second frequency or second frequency band is used, wherein the first and second frequency or frequency band are different,
wherein especially and for performing and/or enabling sidelink-based and/or PC5-based communication between the first user equipment (20) and the second user equipment (21), the second user equipment (21) transmits a second radiofrequency signal (202) towards the at least one network node or antenna entity or functionality (111), and the first user equipment (20) receives, from the at least one network node or antenna entity or functionality (111), a further second radiofrequency signal (212).

3. Method according to one of the preceding claims, wherein
-- the functionality of the at least one network node or antenna entity or functionality (111) of the mobile communication network (100) corresponds to a sidelink relay node that modifies the further radiofrequency signal (211), based on the radiofrequency signal (201), in a manner according to at least one out of the following:
-- the sidelink relay node performs recoding of the radiofrequency signal (201) to obtain the further radiofrequency signal (211),
-- the sidelink relay node performs layer 2-processing or layer 2 and layer 3-processing of the radiofrequency signal (201),
-- the sidelink relay node performs a bundling and/or redirecting of the further radiofrequency signal (211), especially using a beamforming antenna.

4. Method according to one of the preceding claims, wherein a 3GPP-defined sidelink and/or PC5 communication is used,
wherein especially the at least one network node or antenna entity or functionality (111) is a non-terrestrial network node aboard a satellite or a high-altitude platform.

5. Method according to one of the preceding claims, wherein the sidelink-based and/or PC5-based communication between the first user equipment (20) and the second user equipment (21)
-- occurs or is realized exclusively via the at least one network node or antenna entity or functionality (111) - by means of the second user equipment (21) receiving the further radiofrequency signal (211) from the at least one network node or antenna entity or functionality (111) -, especially due to the radiofrequency signal (201) being too weak or undetectable by the second user equipment (21) at the location of the second user equipment (21), or
-- occurs or is realized both via a direct sidelink-based and/or PC5-based communication by means of the second user equipment (21) receiving both the further radiofrequency signal (211) from the at least one network node or antenna entity or functionality (111) and as well the radiofrequency signal (201) from the first user equipment (20).

6. Method according to one of the preceding claims, wherein the sidelink-based and/or PC5-based communication also involves - besides the first user equipment (20) and the second user equipment (21) - a third user equipment (22), wherein the sidelink-based and/or PC5-based communication between the first, second and third user equipments (20, 21, 22):
-- occurs or is realized - between the first and second user equipments (20, 21) - via the at least one network node or antenna entity or functionality (111) by means of the second user equipment (21) receiving the further radiofrequency signal (211) from the at least one network node or antenna entity or functionality (111), and
-- occurs or is realized - between the first and third user equipments (20, 22) - via the direct sidelink-based and/or PC5-based communication by means of the third user equipment (22) receiving the radiofrequency signal (201) from the first user equipment (20).

7. Method according to one of the preceding claims, wherein the sidelink-based and/or PC5-based communication also involves - besides using the at least one network node or antenna entity or functionality (111) of a mobile communication network (100) - using at least one further network node or antenna entity or functionality (112) of the mobile communication network (100), wherein in a third step of the method - subsequent to the first step and prior to the second step -, the at least one network node or antenna entity or functionality (111) of the mobile communication network (100), transmits an intermediate radiofrequency signal towards the at least one further network node or antenna entity or functionality (112) of the mobile communication network (100), wherein the second user equipment (21) receives, from the at least one further network node or antenna entity or functionality (112) of the mobile communication network (100), the further radiofrequency signal (211), wherein the at least one further network node or antenna entity or functionality (112) generates the further radiofrequency signal (211) based on the intermediate radiofrequency signal,
wherein especially, the functionality of the at least one antenna entity or functionality (111) and/or of the at least one further network node or antenna entity or functionality (112) corresponds to a physical layer repeater, and wherein the intermediate radiofrequency signal is or corresponds to the radiofrequency signal (201) having been received and amplified by the at least one network node or antenna entity or functionality (111) of the mobile communication network (100), wherein the further radiofrequency signal (211) is or corresponds to the intermediate radiofrequency signal having been received and amplified by the at least one further network node or antenna entity or functionality (112), and/or wherein especially, the functionality of the at least one antenna entity or functionality (111) corresponds to a sidelink relay node and/or the functionality of the at least one further network node or antenna entity or functionality (112) corresponds to a further sidelink relay node, wherein the sidelink relay node modifies the intermediate radiofrequency signal, based on the radiofrequency signal (201), and/or wherein the further sidelink relay node modifies the further radiofrequency signal (211), based on the intermediate radiofrequency signal, in a manner according to at least one out of the following:
-- the sidelink relay node performs recoding of the radiofrequency signal (201) to obtain the intermediate radiofrequency signal and/or the further sidelink relay node performs recoding of the intermediate radiofrequency signal to obtain the further radiofrequency signal (211),
-- the sidelink relay node performs layer 2-processing or layer 2 and layer 3-processing of the radiofrequency signal (201) and/or the further sidelink relay node performs layer 2-processing or layer 2 and layer 3-processing of the intermediate radiofrequency signal,
-- the sidelink relay node performs a bundling and/or redirecting of the intermediate radiofrequency signal, especially using a beamforming antenna, and/or the further sidelink relay node performs a bundling and/or redirecting of the further radiofrequency signal (211), especially using a beamforming antenna.

8. User equipment (20) for performing and/or enabling sidelink-based and/or PC5-based communication between the user equipment (20) and a second user equipment (21) according to one of the preceding claims using at least one network node or antenna entity or functionality (111) of a mobile communication network (100), wherein the at least one network node or antenna entity or functionality (111) is part of a non-terrestrial network or network part of the mobile communication network (100),
wherein the user equipment (20) is configured such that:
-- the user equipment (20) transmits a radiofrequency signal (201) towards the at least one network node or antenna entity or functionality (111) of the mobile communication network (100),
-- the second user equipment (20) receives, from the at least one network node or antenna entity or functionality (111) of the mobile communication network (100), a further radiofrequency signal (211).

9. System or mobile communication network (100) for performing and/or enabling sidelink-based and/or PC5-based communication between a first user equipment (20) and a second user equipment (21) using at least one network node or antenna entity or functionality (111) of the mobile communication network (100), wherein the at least one network node or antenna entity or functionality (111) is part of a non-terrestrial network or network part of the mobile communication network (100),
wherein the system or mobile communication network (100) is configured such that:
-- the at least one network node or antenna entity or functionality (111) of the mobile communication network (100) receives, from the first user equipment (20), a radiofrequency signal (201),
-- the at least one network node or antenna entity or functionality (111) of the mobile communication network (100) transmits, to the second user equipment (20), a further radiofrequency signal (211),
wherein the functionality of the at least one network node or antenna entity or functionality (111) of the mobile communication network (100) and/or the further radiofrequency signal (201) is or corresponds to at least one out of the following:
-- the at least one network node or antenna entity or functionality (111) of the mobile communication network (100) functions, with regard to the radiofrequency signal (201), as a passive reflector and/or as a reconfigurable intelligent surface,
-- the further radiofrequency signal (211) is or corresponds to the radiofrequency signal (201) being or having been reflected by the at least one network node or antenna entity or functionality (111) of the mobile communication network (100),
-- the functionality of the at least one network node or antenna entity or functionality (111) of the mobile communication network (100) corresponds to a physical layer repeater,
-- the further radiofrequency signal (211) is or corresponds to the radiofrequency signal (201) having been received and amplified by the at least one network node or antenna entity or functionality (111) of the mobile communication network (100).

10. Program comprising a computer readable program code, which, when executed on a computer and/or on a user equipment (20) and/or on a network node or an antenna entity or functionality (111) of a mobile communication network (100), or in part on a user equipment (20) and/or in part on a network node or an antenna entity or functionality (111) of the mobile communication network (100), causes the computer and/or the user equipment (20) and/or the network node or antenna entity or functionality (111) of the mobile communication network (100) to perform a method according one of claims 1 to 7.

11. Computer-readable medium comprising instructions which when executed on a computer and/or on a user equipment (20) and/or on a network node or an antenna entity or functionality (111) of a mobile communication network (100), or in part on a user equipment (20) and/or in part on a network node or an antenna entity or functionality (111) of the mobile communication network (100), causes the computer and/or the user equipment (20) and/or the network node or antenna entity or functionality (111) of the mobile communication network (100) to perform a method according one of claims 1 to 7.

## Amended claims

### Amended claims in accordance with Rule 137(2) EPC.

1. Method for performing and/or enabling sidelink-based and/or PC5-based communication between a first user equipment (20) and a second user equipment (21) using at least one network node or functionality (111) of a mobile communication network (100), wherein the at least one network node or functionality (111) is part of a non-terrestrial network or network part of the mobile communication network (100), wherein a 3GPP-defined sidelink and/or PC5 communication is used, wherein the at least one network node or functionality (111) is a non-terrestrial network node aboard a satellite or a high-altitude platform, wherein the method comprises the following steps:
-- in a first step, the first user equipment (20) transmits a radiofrequency signal (201) towards the at least one network node or functionality (111) of the mobile communication network (100),
-- in a second step, the second user equipment (20) receives, from the at least one network node or functionality (111) of the mobile communication network (100), a further radiofrequency signal (211),
wherein the functionality of the at least one network node or functionality (111) of the mobile communication network (100) or the further radiofrequency signal (201) is or corresponds to at least one out of the following:
-- the at least one network node or functionality (111) of the mobile communication network (100) functions, with regard to the radiofrequency signal (201), as a passive reflector or as a reconfigurable intelligent surface,
-- the further radiofrequency signal (211) is or corresponds to the radiofrequency signal (201) being or having been reflected by the at least one network node or functionality (111) of the mobile communication network (100),
-- the functionality of the at least one network node or functionality (111) of the mobile communication network (100) corresponds to a physical layer repeater,
-- the further radiofrequency signal (211) is or corresponds to the radiofrequency signal (201) having been received and amplified by the at least one network node or functionality (111) of the mobile communication network (100).

2. Method according to claim 1, wherein
-- either, regarding both the radiofrequency signal (201) and the further radiofrequency signal (211), the same frequency or frequency band is used,
-- or wherein, regarding the radiofrequency signal (201), a first frequency or first frequency band is used, and, regarding the further radiofrequency signal (211), a second frequency or second frequency band is used, wherein the first and second frequency or frequency band are different,
wherein especially and for performing and/or enabling sidelink-based and/or PC5-based communication between the first user equipment (20) and the second user equipment (21), the second user equipment (21) transmits a second radiofrequency signal (202) towards the at least one network node or functionality (111), and the first user equipment (20) receives, from the at least one network node or functionality (111), a further second radiofrequency signal (212).

3. Method according to one of the preceding claims, wherein
-- the functionality of the at least one network node or functionality (111) of the mobile communication network (100) corresponds to a sidelink relay node that modifies the further radiofrequency signal (211), based on the radiofrequency signal (201), in a manner according to at least one out of the following:
-- the sidelink relay node performs recoding of the radiofrequency signal (201) to obtain the further radiofrequency signal (211),
-- the sidelink relay node performs layer 2-processing or layer 2 and layer 3-processing of the radiofrequency signal (201),
-- the sidelink relay node performs a bundling and/or redirecting of the further radiofrequency signal (211), especially using a beamforming antenna.

4. Method according to one of the preceding claims, wherein the sidelink-based and/or PC5-based communication between the first user equipment (20) and the second user equipment (21)
-- occurs or is realized exclusively via the at least one network node or functionality (111) - by means of the second user equipment (21) receiving the further radiofrequency signal (211) from the at least one network node or functionality (111)
-, especially due to the radiofrequency signal (201) being too weak or undetectable by the second user equipment (21) at the location of the second user equipment (21), or
-- occurs or is realized both via a direct sidelink-based and/or PC5-based communication by means of the second user equipment (21) receiving both the further radiofrequency signal (211) from the at least one network node or functionality (111) and as well the radiofrequency signal (201) from the first user equipment (20).

5. Method according to one of the preceding claims, wherein the sidelink-based and/or PC5-based communication also involves - besides the first user equipment (20) and the second user equipment (21) - a third user equipment (22), wherein the sidelink-based and/or PC5-based communication between the first, second and third user equipments (20, 21, 22):
-- occurs or is realized - between the first and second user equipments (20, 21) - via the at least one network node or functionality (111) by means of the second user equipment (21) receiving the further radiofrequency signal (211) from the at least one network node or functionality (111), and
-- occurs or is realized - between the first and third user equipments (20, 22) -via the direct sidelink-based and/or PC5-based communication by means of the third user equipment (22) receiving the radiofrequency signal (201) from the first user equipment (20).

6. Method according to one of the preceding claims, wherein the sidelink-based and/or PC5-based communication also involves - besides using the at least one network node or functionality (111) of a mobile communication network (100) - using at least one further network node or functionality (112) of the mobile communication network (100), wherein in a third step of the method - subsequent to the first step and prior to the second step -, the at least one network node or functionality (111) of the mobile communication network (100), transmits an intermediate radiofrequency signal towards the at least one further network node or functionality (112) of the mobile communication network (100), wherein the second user equipment (21) receives, from the at least one further network node or functionality (112) of the mobile communication network (100), the further radiofrequency signal (211), wherein the at least one further network node or functionality (112) generates the further radiofrequency signal (211) based on the intermediate radiofrequency signal, wherein especially, the functionality of the at least one antenna entity or functionality (111) and/or of the at least one further network node or functionality (112) corresponds to a physical layer repeater, and wherein the intermediate radiofrequency signal is or corresponds to the radiofrequency signal (201) having been received and amplified by the at least one network node or functionality (111) of the mobile communication network (100), wherein the further radiofrequency signal (211) is or corresponds to the intermediate radiofrequency signal having been received and amplified by the at least one further network node or functionality (112), and/or
wherein especially, the functionality of the at least one antenna entity or functionality (111) corresponds to a sidelink relay node and/or the functionality of the at least one further network node or functionality (112) corresponds to a further sidelink relay node, wherein the sidelink relay node modifies the intermediate radiofrequency signal, based on the radiofrequency signal (201), and/or wherein the further sidelink relay node modifies the further radiofrequency signal (211), based on the intermediate radiofrequency signal, in a manner according to at least one out of the following:
-- the sidelink relay node performs recoding of the radiofrequency signal (201) to obtain the intermediate radiofrequency signal and/or the further sidelink relay node performs recoding of the intermediate radiofrequency signal to obtain the further radiofrequency signal (211),
-- the sidelink relay node performs layer 2-processing or layer 2 and layer 3-processing of the radiofrequency signal (201) and/or the further sidelink relay node performs layer 2-processing or layer 2 and layer 3-processing of the intermediate radiofrequency signal,
-- the sidelink relay node performs a bundling and/or redirecting of the intermediate radiofrequency signal, especially using a beamforming antenna, and/or the further sidelink relay node performs a bundling and/or redirecting of the further radiofrequency signal (211), especially using a beamforming antenna.

7. User equipment (20) for performing and/or enabling sidelink-based and/or PC5-based communication between the user equipment (20) and a second user equipment (21) according to one of the preceding claims using at least one network node or functionality (111) of a mobile communication network (100), wherein the at least one network node or functionality (111) is part of a non-terrestrial network or network part of the mobile communication network (100), wherein a 3GPP-defined sidelink and/or PC5 communication is used, wherein the at least one network node or functionality (111) is a non-terrestrial network node aboard a satellite or a high-altitude platform, wherein the user equipment (20) is configured such that:
-- the user equipment (20) transmits a radiofrequency signal (201) towards the at least one network node or functionality (111) of the mobile communication network (100),
-- the second user equipment (20) receives, from the at least one network node or functionality (111) of the mobile communication network (100), a further radiofrequency signal (211).

8. System or mobile communication network (100) for performing and/or enabling sidelink-based and/or PC5-based communication between a first user equipment (20) and a second user equipment (21) using at least one network node or functionality (111) of the mobile communication network (100), wherein the at least one network node or functionality (111) is part of a non-terrestrial network or network part of the mobile communication network (100), wherein a 3GPP-defined sidelink and/or PC5 communication is used, wherein the at least one network node or functionality (111) is a non-terrestrial network node aboard a satellite or a high-altitude platform, wherein the system or mobile communication network (100) is configured such that:
-- the at least one network node or functionality (111) of the mobile communication network (100) receives, from the first user equipment (20), a radiofrequency signal (201),
-- the at least one network node or functionality (111) of the mobile communication network (100) transmits, to the second user equipment (20), a further radiofrequency signal (211),
wherein the functionality of the at least one network node or functionality (111) of the mobile communication network (100) or the further radiofrequency signal (201) is or corresponds to at least one out of the following:
-- the at least one network node or functionality (111) of the mobile communication network (100) functions, with regard to the radiofrequency signal (201), as a passive reflector or as a reconfigurable intelligent surface,
-- the further radiofrequency signal (211) is or corresponds to the radiofrequency signal (201) being or having been reflected by the at least one network node or functionality (111) of the mobile communication network (100),
-- the functionality of the at least one network node or functionality (111) of the mobile communication network (100) corresponds to a physical layer repeater,
-- the further radiofrequency signal (211) is or corresponds to the radiofrequency signal (201) having been received and amplified by the at least one network node or functionality (111) of the mobile communication network (100).

9. Program comprising a computer readable program code, which, when executed on a computer and/or on a user equipment (20) and/or on a network node or an antenna entity or functionality (111) of a mobile communication network (100), or in part on a user equipment (20) and/or in part on a network node or an antenna entity or functionality (111) of the mobile communication network (100), causes the computer and/or the user equipment (20) and/or the network node or functionality (111) of the mobile communication network (100) to perform a method according one of claims 1 to 7.

10. Computer-readable medium comprising instructions which when executed on a computer and/or on a user equipment (20) and/or on a network node or an antenna entity or functionality (111) of a mobile communication network (100), or in part on a user equipment (20) and/or in part on a network node or an antenna entity or functionality (111) of the mobile communication network (100), causes the computer and/or the user equipment (20) and/or the network node or functionality (111) of the mobile communication network (100) to perform a method according one of claims 1 to 7.
